## Europäisches Patentamt
## European Patent Office
## Office européen des brevets

(19)

(11) Numéro de publication: **0 160 586**
**B1**

(12)

# FASCICULE DE BREVET EUROPÉEN

(45) Date de publication du fascicule du brevet:
**13.01.88**

(51) Int. Cl.⁴: **H 01 H 13/18,** B 60 Q 1/44

(21) Numéro de dépôt: **85400482.7**

(22) Date de dépôt: **13.03.85**

(54) Contacteur électrique pour servomoteur pneumatique de freinage.

(30) Priorité: **21.03.84 FR 8404389**

(43) Date de publication de la demande:
**06.11.85 Bulletin 85/45**

(45) Mention de la délivrance du brevet:
**13.01.88 Bulletin 88/2**

(84) Etats contractants désignés:
**DE GB IT NL SE**

(56) Documents cité:
**FR-A-2 476 577**
**US-A-2 547 765**
**US-A-3 258 571**
**US-A-3 293 849**

(73) Titulaire: **BENDIX France, 126, rue de Stalingrad, F-93700 Drancy (FR)**

(72) Inventeur: **Picot, Pascal, 1, Place Jean Jaurès, F-94380 Bonneuil- Sur- Marne (FR)**
Inventeur: **Pressaco, Pierre, 45 rue Emile Zola Bâtiment C, F-93120 La Courneuve (FR)**

(74) Mandataire: **Le Moenner, Gabriel, SERVICE BREVETS BENDIX 44, Rue François 1er, F-75008 Paris (FR)**

## Description

La présente invention concerne les contacteurs électriques, destinés à être reliés à un circuit électrique d'avertissement de freinage et à être montés à engagement étanche dans un orifice d'une paroi arrière d'un boîtier de servomoteur pneumatique d'assistance ou freinage divisé en une chambre avant et une chambre arrière sélectivement intercommuniquantes par un moyen de piston déplaçable à partir d'une position de repos voisine de la paroi arrière, le contacteur étant du type comprenant un corps en matériau plastique avec une première partie de corps destinée à être engagée dans l'ouverture de la paroi arrière du boîtier de servomoteur et une seconde partie de corps demeurant extérieure au boîtier de servomoteur et renfermant au moins une paire de contacts électriques métalliques actionnables par un palpeur monté coulissant dans un alésage de la première partie de corps et sollicité par un ressort vers l'extérieur de cette première partie de corps pour porter normalement contre le moyen de piston lorsque ce dernier se trouve au voisinage de sa position de repos, la paire de contacts comprenant une lame de contact fixe et une lame de contact mobile sollicitée élastiquement à l'écart de la lame de contact fixe dans la direction opposée à la direction de sollicitation du palpeur et couplée à un plongeur.

Un contacteur électrique d'avertissement de freinage de ce type est décrit dans le document FR-A-2 476 577, dont le contenu est supposé intégré ici pour référence. Dans ce document, la seconde partie de corps du contacteur, coaxiale à la première partie de corps de montage, définit une cavité dans laquelle se terminent deux cosses de raccordement formant contacts électriques susceptibles d'être sélectivement reliés électriquement l'un à l'autre par une rondelle portée par le palpeur du contacteur, l'ensemble rondelle/plongeur étant sollicité par un ressort prenant appui sur le fond de la cavité, d'une part, et sur la rondelle, d'autre part. Dans un tel agencement, la course morte de fermeture des contacts est déterminée par la position du moyen de piston du servomoteur par rapport à la paroi arrière de son boîtier. Or, dans les servomoteurs pneumatiques d'assistance au freinage du type considéré, les tolérances de fabrication et de montage peuvent se traduire par des variations importantes du positionnement du moyen de piston par rapport a la paroi arrière du boîtier, ce qui impose donc un dimensionnement axial important de la cavité de la seconde partie de corps ainsi que des conditions de fonctionnement variables au niveau de l'établissement de la fermeture des contacts électriques pour le ressort sollicitant le palpeur vers l'extérieur et établissant la pression de contact de la rondelle sur les contacts électriques.

Le document US-A-2 547 765 décrit un contacteur électrique dans lequel un plongeur est monté coulissant dans un corps et comporte une collerette coopérant avec un épaulement servant de butée lorsque le plongeur se déplace vers l'extérieur du corps.

Dans le document FR-A-2 476 577 susmentionné, le palpeur coulisse dans un alésage susceptible d'établir une communication entre la cavité de la seconde partie de corps du contacteur et la chambre arrière du boîtier de servomoteur dans lequel le contacteur est monté. Toutefois, du fait du montage relativement juste du palpeur dans cet alésage et de la présence éventuelle de lubrifiant sur le palpeur ou l'alésage, il n'y a pas de communication franche entre la cavité du contacteur et la chambre arrière du servomoteur, suivant une approche voisine de l'agencement décrit dans le document US-A-3 293 849 où le contacteur est totalement isolé de la chambre arrière du servomoteur par une membrane étanche.

La présente invention a pour objet de proposer un contacteur électrique du type défini plus haut, de fiabilité accrue, permettant l'établissement de contacts électriques francs dans une atmosphère raréfiée limitant les phénomènes d'arcs aux contacts et, donc, une corrosion ou une oxydation de ces contacts.

Pour ce faire, selon l'invention, le plongeur est monté coulissant dans le palpeur et comporte un épaulement susceptible de coopérer avec un élément de butée du palpeur lorsque ce dernier se déplace vers l'extérieur de la première partie de corps, les lames de contact étant disposées dans une cavité fermée formée dans la seconde partie de corps et communiquant librement avec la chambre arrière du servomoteur par des passages formés dans la première partie de corps.

De cette façon, la cavité du contacteur, renfermant les lames de contact, est en libre communication permanente avec la chambre arrière du servomoteur, laquelle se trouve typiquement sélectivement en communication avec la chambre avant, maintenue sous vide (configuration normale de repos du servomoteur), ou avec l'atmosphère, pour provoquer ainsi un déplacement du moyen de piston, lors d'une opération de freinage. Ainsi, lors d'une phase de freinage, la cavité du contacteur, initialement en atmosphère raréfiée, se remplit progressivement d'air atmosphérique, la fermeture des contacts s'effectuant toutefois encore en atmosphère raréfiée, ce qui garantit ainsi une durée de vie notablement améliorée au contact.

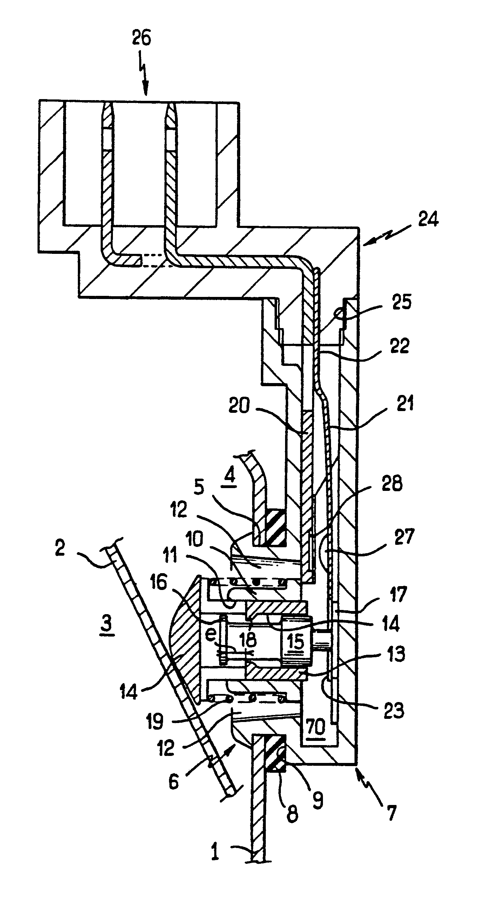

D'autres caractéristiques et avantages de la presente invention ressortiront de la description suivante d'un mode de réalisation, donné à titre illustratif, faite en relation avec le dessin annexé sur lequel :
- la planche unique représente une vue en coupe longitudinale d'un contacteur électrique selon l'invention monté en place sur la paroi arrière d'un boîtier de servomoteur pneumatique d'assistance au freinage.

Sur cette figure, on reconnaît une portion de la paroi arrière 1 d'un boîtier de servomoteur pneumatique d'assitance au freinage divisé intérieurement par un moyen de piston 2 en une chambre avant, ou chambre à vide 3, et une chambre arrière, ou chambre de travail 4 entre le moyen de piston 2 et la paroi arrière 1. Cette paroi arrière 1 comporte un orifice 5 dans lequel est montée par engagement élastique unidirectionnel une première partie de corps 6 d'un contacteur électrique comprenant généralement une seconde partie de corps 7 demeurant extérieure à la paroi arrière 1 du boîtier de servomoteur, les deux parties de corps 6 et 7 étant formées d'une seule pièce à partir d'un matériau plastique présentant une certaine élasticité pour permettre l'engagement élastique de la première partie de corps 6 dans l'orifice 5 et son maintien verrouillé en place dans ce dernier. Come décrit dans le document FR-A-2 476 577, la première partie de corps 6 présente une configuration générale cylindrique et est pourvue périphériquement d'un joint d'étanchéité annulaire 8 destiné, en configuration de montage, à être comprimé entre la face extérieure arrière de la paroi arrière 1 et un épaulement annulaire défini autour de la première partie de corps 6 par la face avant de la seconde partie de corps 7.

Conformément à l'invention, la première partie de corps 6 comporte une partie centrale 10 formée avec un alésage central 11 et autour de laquelle sont ménagés plusieurs passages 12, angulairement répartis, faisant librement communiquer une cavité intérieure 70 de la seconde partie de corps 7 avec la chambre arrière 4 du servomoteur.

Dans l'alésage 11 est monté coulissant un palpeur 13 comportant une tête d'extrémité 14 destinée à porter en appui contre la face arrière du moyen de piston 2 du servomoteur. Le palpeur 13 est formé intérieurement avec un logement central cylindrique 14 dans lequel coulisse une partie de diamètre élargi d'un plongeur 15 comportant, à son extrémité voisine de la tête 14 du palpeur 13, une bride annulaire 16 et, à son extrémité opposée, une autre bride annulaire 17, les deux brides 16 et 17 étant reliées à la partie de diamètre élargi du plongeur 15 par des parties de diamètre réduit. Le palpeur 13 comporte, en outre, une butée annulaire 18 faisant saillie radialement vers l'intérieur dans le logement 14 et suaceptible de coopérer avec la face arrière de la bride ou collerette d'extrémité 16 du plongeur 15. Le palpeur 13 est sollicité vers l'extérieur de la première partie de corps 6 dans la direction vers le moyen de piston 2, par un ressort hélicoïdal 19 monté sur la périphérie de la partie centrale 10 et prenant appui, d'une part, sur un épaulement d'extrémité de la partie centrale 10, et, d'autre part, sur la face arrière de la tête 14 du palpeur 13.

Selon un aspect de l'invention, dans la cavité allongée 70 de la seconde partie de corps 7 du contacteur sont montées perpendiculairement au plongeur 15 une lame de contact fixe 20 positionnée sur la face avant de la cavité 70 voisine de la paroi arrière 1 du boîtier de servomoteur et une lame de contact mobile 21 réalisée en métal élastique et conformée de façon à s'étendre, au repos, suivant un angle par rapport à la lame de contact fixe 20 à l'écart de celle-ci. Typiquement, la lame de contact mobile 21 est montée en porte-à-faux par son extrémité 22 éloignée du plongeur 15 et son extrémité libre 23 est découpée en forme de U, et engagée sur la partie de diamètre réduit entre la partie de plus grand diamètre du plongeur 15 et la bride d'extrémité 23 pour solliciter normalement cette dernière en appui contre la face arrière de la cavité 70 sous l'effet de l'élasticité propre de la lame de contact mobile 21.

Comme on le voit sur la figure unique, la lame de contact mobile 21 est avantageusement sertie par son extrémité 22 dans un couvercle 24 monté et soudé, par exemple aux ultrasons, dans l'extrémité élargie 25 de la cavité 70 opposée à la première partie de corps 6 de façon à clore de manière étanche cette cavité 70, le capuchon 24 comportant des organes électriques 26 de raccordement des lames de contact 20 et 21 à un circuit électrique d'avertissement de freinage (non représenté). De préférence, la lame de contact mobile 21 est pourvue d'une zone d'établissement de contact hémisphérique 27 destinée a coopérer avec une zone de contact en creux 28 du contact fixe 20.

Comme on le voit sur la figure unique, dans la configuration de repos de l'ensemble servomoteur/contacteur électrique, le palpeur 13 est au moins partiellement rétracté a l'intérieur de la première partie de corps 6, a l'encontre du ressort 19, sous l'effet du moyen de piston 2 rappelé, par d'autres moyens (non représentés), dans sa position de repos dans le boîtier de servomoteur. Dans cette configuration, le plongeur 15 occupe également sa position de repos avec sa bride 17 portant contre la face arrière de la cavité 70 sous l'effet de la force élastique de la lame de contact mobile 21 franchement écartée de la lame de contact fixe 20. On observe, dans cette configuration de repos, qu'il existe, entre la collerette d'extrémité 16 du plongeur 15 et la butée annulaire 18 du palpeur 13 un jeu e qui peut varier dans des proportions notables et accomoder ainsi les tolérances de positionnement au repos entre le moyen de piston 2 et la paroi arrière 1 du boîtier de servomoteur, sans modifier pour autant le position de repos de l'ensemble lame de contact mobile 21/ plongeur 15. Par contre, en fonctionnement, lorsque le moyen de piston 2 est écarté de la paroi arrière 1 sous l'effet de l'admission de l'air atmosphérique dans la chambre de travail arrière 4, le palpeur 13 suit le déplacement du moyen de piston 2, en annulant tout d'abord la course morte e puis en entraînant, par sa butée annulaire intérieure 18, le plongeur 15 jusqu'a venir plaquer le plot de contact 27 de la lame mobile 21 contre la lame de contact fixe 20 à l'encontre de la sollicitation élastique propre de la lame de contact mobile 21. On comprendra que le ressort 19 est dimensionné de façon que, dans la configuration complètement étendue du palpeur 13 à l'extérieur de la première partie de corps 6, sa force finale soit environ le double de la force élastique propre de la lame de contact mobile 21 tendant à séparer cette dernière de la lame de contact fixe 20. Come susmentionné, la cavité 70 étant hermétiquement fermée vis-à-vis de l'air atmosphérique ambiant mais communiquant largement avec la chambre arrière 4 du servomoteur par les divers passages 12, la fermeture entre les contacts 21 et 20 (27, 28) s'effectue alors que règne dans la cavité 13 une atmosphère raréfiée. En fonctionnement normal, les contacts en question sont maintenus fermés tant que de l'air atmosphérique est maintenu dans la chambre arrière 4 (et la cavité 13). Par contre, la réouverture des contacts s'effectue lorsque le moyen de piston 2 revient au voisinage de sa position de repos, c'est-à-dire avec la chambre arrière 4 (et, partant, la cavité 13) de nouveau en comunication avec le vide de la chambre avant 3, ce qui garantit ainsi non seulement la fermeture mais également l'ouverture des contacts en atmosphère raréfiée peu oxydante et exempte d'humidité.

## Revendications

1. Contacteur électrique, destiné à être relié à un circuit électrique d'avertissement de freinage et à être monté à engagement étanche dans un orifice (5) d'une paroi arrière (1) d'un boîtier de servomoteur pneumatique d'assistance au freinage divisé en une chambre avant (3) et une chambre arrière (4) sélectivement intercommuniquantes par un moyen de piston (2) déplaçable à partir d'une position de repos voisine de la paroi arrière (1), le contacteur comprenant un corps en matériau plastique avec une première partie de corps (6) destinée à être engagée dans l'ouverture (5) de la paroi arrière (1) et une seconde partie de corps (7) demeurant extérieure au boîtier et renfermant au moins une paire de contacts électriques métalliques (20, 21) actionnables par un palpeur (13) monté coulissant dans un alésage (11) de la première partie de corps (6) et sollicité par un ressort (19) vers l'extérieur de la première partie de corps pour porter normalement contre le moyen de piston (2) au voisinage de sa position de repos, la paire de contacts comprenant une lame de confact fixe (20) et une lame de contact mobile (21) sollicitée élastiquement à l'écart de la lame de contact fixe (20) dans la direction opposée à la direction de sollicitation du palpeur (13) et couplée à un plongeur caractérisé en ce que le plongeur (15) est monté coulissant dans le palpeur (13) et comporte un épaulement (16) supceptible de coopérer avec un élément de butée (18) du palpeur (13) lorsque ce dernier se déplace vers l'extérieur de la première partie de corps (6), les lames de contact (20, 21) étant disposées dans une cavité (70) fermée formée dans la seconde partie de corps (7) et communiquent librement avec la chambre arrière (4) du servomoteur par des passages (12) formés dans la première partie de corpe (6).

2. Contacteur selon la revendication 1, caractérisé en ce que les passages (12) sont ménagés autour d'une partie centrale (10) de la première partie de corps (6) dans lequel est ménagé ledit alésage (11).

3. Contacteur selon la revendication 1 ou 2, caractérisé en ce que la cavité (70) est fermée de façon étanche à son extrémité (25) opposée à la première partie de corps (6) par un organe de fermeture et de raccordement (24) fixé sur la seconde partie de corps (7) et permettant le raccordement électrique (26) des lames de contact (20, 21) au électrique d'avertissement.

4. Contacteur selon la revendictaion 3, caractérisé en ce que la lame de contact mobile (21) est élastique, est montée en porte-à-faux par une de ses extrémités (22) dans l'organe de fermeture et de raccordement (24), et s'étend au repos suivant un angle par rapport à la lame de contact fixe (20).

5. Contacteur selon la revendication 4, caractérisé en ce que la plongeur (15) coulisse dans un logement central (14) du palpeur (13) comprenant une butée faisant saillie radialement vers l'intérieur (18), et comporte une collerette d'extrémité (17) contre laquelle porte l'extrémité libre (23) de la lame de contact mobile (21).

6. Contacteur selon la revendication 5, caractérisé en ce que l'extrémité libre (23) de la lame de contact mobile (21) est découpée en forme de U.

7. Contacteur selon la revendication 6, cractérisé en ce que l'épaulement est formé par une bride annulaire (16) formée à l'extrémité du plongeur (15) opposée à la collerette (17).

8. Contacteur selon l'une des revendications précédentes, caractérisé en ce que la première partie de corps (6) est pourvue d'un joint d'étanchéité annulaire périphérique (8) en appui contre un épaulement annulaire (9) formé par la seconde partie de corps (7).

9. Servomoteur pneumatique d'assistace au freinage, comprenant un boîtier divisé intérieurement en deux chambres (3, 4) par un moyen de piston (2) déplaçable à partir d'une position de repos voisine d'une paroi arrière (1) du boîtier pourvue d'une orifice (5), caractérisé en ce qu'il comporte un contracteur électrique selon l'une quelconque des revendications précédentes monté à engagement étanche par sa première partie de corps (6) dans l'orifice (5).

## Patentansprüche

1. Elektrischer Schalter, der mit einem elektrischen Bremswarnkreis verbindbar und der abgedichtet in eine Öffnung (5) einer Rückwand (1) eines Gehäuses für einen pneumatischen Bremsservomotor einsetzbar ist, welches in eine vordere Kammer (3) und eine hintere Kammer (4) unterteilt ist, die wahlweise durch einen aus einer Ruhestellung benachbart zur Rückwand (1) verschiebbaren Kolben (2) miteinander verbindbar sind, wobei der Schalter einen Körper aus Kunststoff mit einem ersten Körperteil (6) und einem zweiten Körperteil (7) aufweist, von denen der ersten Körperteil in eine Öffnung (5) der Rückwand (1) einsetzbar ist und der zweite Körperteil außerhalb des Gehäuses bleibt und mindestens ein Paar metallischer elektrischer Kontakte (20, 21) enthält, die durch einen Taster (13) betätigbar sind, welcher in einer Bohrung (11) des ersten Körperteils (6) gleitbar gelagert ist und von einer Feder (19) in Richtung außerhalb des ersten Körperteils vorgespannt wird, um normalerweise an dem Kolben (2) benachbart zu seiner Ruhestellung anzuliegen, wobei das Kontaktpaar eine festgelegte Kontaktzunge (20) und eine bewegliche Kontaktzunge (21) aufweist, welche weg von der festgelegten Kontaktzunge (20) in der zur Vorspannrichtung des Tasters (13) entgegengesetzten Richtung elastisch vorgespannt ist und mit einem Plunger verbunden ist, dadurch gekennzeichnet, daß der Plunger (15) in dem Taster (13) gleitend gelagert ist und eine Schulter (16) aufweist, die mit einem Anschlagteil (18) des Tasters (13) zusammenwirkt, wenn sich der letztere in Richtung außerhalb des ersten Körperteils (16) verschiebt, wobei die Kontaktzungen (20, 21) in einer geschlossenen Ausnehmung (70) angeordnet sind, die in dem zweiten Körperteil (7) gebildet ist und mit der rückwärtigen Kammer (4) des Servomotors durch in dem ersten Körperteil (6) gebildete Kanäle (12) in freier Verbindung steht.

2. Schalter nach Anspruch 1, dadurch gekennzeichnet, daß die Kanäle (12) um einen zentralen Abschnitt (10) des ersten Körperteils (6) herum gebildet sind, in welchem die besagte Bohrung (11) gebildet ist.

3. Schalter nach Anspruch 1 oder 2, dadurch gekennzeichnet, daß die Ausnehmung (70) an ihrem dem ersten Körperteil (6) entgegengesetzten Ende (25) durch ein Schließ- und Verbindungsteil (24) abgedichtet verschlossen ist, welches an dem zweiten Körperteil (7) angebracht ist und die elektrische Verbindung (26) der Kontaktzungen (20, 21) mit dem elektrischen Warnkreis ermöglicht.

4. Schalter nach Anspruch 3, dadurch gekennzeichnet, daß die bewegliche Kontaktzunge (21) elastisch ist, mit einem ihrer Enden (22) in dem Schließ- und Verbindungsteil (24) freitragend angebracht ist und in der Ruhestellung unter einem Winkel bezüglich der festgelegten Kontaktzunge (20) verläuft.

5. Schalter nach Anspruch 4, dadurch gekennzeichnet, daß der Plunger (15) in einer zentralen Aufnahme (14) des Tasters (13), die mit einem radial nach innen (18) vorstehenden Anschlag versehen ist, und an seinem Ende einen Ring (17) trägt, an dem das freie Ende (23) der beweglichen Kontaktzunge (21) angreift.

6. Schalter nach Anspruch 5, dadurch gekennzeichnet, daß das freie Ende (23) der beweglichen Kontaktzunge (21) O-förmig ausgeschnitten ist.

7. Schalter nach Anspruch 6, dadurch gekennzeichnet, daß die Schulter aus einem Ringflansch (16) besteht, der an dem dem Ring (17) entgegengesetzten Ende des Plungers (15) gebildet ist.

8. Schalter nach einem der vorhergehenden Ansprüche, dadurch gekennzeichnet, daß der erste Körperteil (6) mit einem peripheren Dichtring (8) versehen ist, der an einer von dem zweiten Körperteil (7) gebildeten Ringschulter (9) anliegt.

9. Pneumatischer Bremsservomotor mit einem Gehäuse, das innen in zwei Kammern (3, 4) unterteilt ist, und zwar von einem Kolben (2), der aus einer Ruhestellung benachbart zu einer mit einer Öffnung (5) versehenen Rückwand (1) des Gehäuses verschiebbar ist, dadurch gekennzeichnet, daß er einen elektrischen Schalter nach einem der vorhergehenden Ansprüche aufweist, der mit seinem ersten Körperteil (6) in der Öffnung (5) abgedichtet eingesetzt ist.

**Claims**

1. Electric contactor, intended to be joined to an electric circuit for warning of braking and to be mounted in sealed engagement in an opening (5) in a rear wall (1) of a pneumatic servo motor casing for assistance in braking divided into a front chamber (3) and a rear chamber (4) intercommunicating selectively by a piston means (2) capable of being displaced from a rest position close to the rear wall (1), the contactor incorporating a body made of plastic with a first body portion (6) intended to be engaged in the opening (5) in the rear wall (1) and a second body portion (7) situated outside the casing and enclosing at least one pair of electric contacts made of metal (20, 21) capable of being actuated by a follower (13) mounted so as to slide in a bore (11) in the first body portion (6) and pushed by a spring (19) towards the outside of the first body portion so as to bear normally against the piston means (2) in the region of its rest position, the pair of contacts comprising a fixed contact blade (20) and a movable contact blade (21) elastically pushed away from the fixed contact blade (20) in the opposite direction to the direction in which the follower (13) is pushed and coupled to a plunger characterized in that the plunger (15) is mounted so as to slide in the follower (13) and incorporating a shoulder (16) capable of interacting with an abutment element (18) of the follower (13) when the latter moves towards the outside of the first body portion (6), the contact blades (20, 21) being arranged in a closed cavity (70) formed in the second body portion (7) and communicating freely with the rear chamber (4) of the servo motor via passages (12) made in the first body portion (6).

2. Contactor according to Claim 1, characterized in that the passages (12) are arranged around a central portion (10) of the first body portion (6) in which the said bore (11) is arranged.

3. Contactor according to Claim 1 or 2, characterized in that the cavity (70) is closed in a sealed manner at its opposite end (25) from the first body portion (6) by a closing and connecting component (24) fixed to the second body portion (7) and forming the electric connection (26) of the contact blades (20, 21) to the electric warning circuit.

4. Contactor according to Claim 3, characterized in that the movable contact blade (21) is elastic, is mounted at one of its ends (22) so as to overhang in the closing and connecting component (24), and lies at an angle, at rest, relative to the fixed contact blade (20).

5. Contactor according to Claim 4, characterized in that the plunger (15) slides in a central housing (14) of the follower (13) comprises an abutment projecting radially inwards (18), and comprises an end collar (17) against which the free end (23) of the movable contact blade (21) bears.

6. Contactor according to Claim 5, characterized in that the free end (23) of the movable contact blade (21) is cut away in the shape of a U.

7. Contactor according to Claim 6, characterized in that the shoulder is formed by an annular flange (16) formed at the opposite end of the plunger (15) from the collar (17).

8. Contactor according to one of the preceding claims, characterized in that the first body portion (6) is provided with a peripheral annular seal (8) bearing against an annular shoulder (9) formed by the second body portion (7).

9. Pneumatic servo motor for assistance in braking, incorporating a casing divided internally into two chambers (3, 4) by a piston means (2) capable of moving from a rest position close to a rear wall (1) of the casing provided with an opening (5), characterized in that it incorporates an electric contactor according to any one of the preceding claims mounted in sealed engagement by its first body portion (6) in the opening (5).